# FASCICULE DE BREVET EUROPEEN

(11) **EP 0 485 254 B1**
(45) Date de publication et mention de la délivrance du brevet: **17.01.1996**
(21) Numéro de dépôt: 91402849.3
(22) Date de dépôt: 24.10.1991
(51) Int. Cl.: G05D 23/02

(54) **Thermostat actionné par une capsule à cire dilatable et muni d'un dispositif de sécurité**
Mit einer Wachskapsel betriebener und mit einer Sicherheitsvorrichtung versehener Thermostat
Wax expansion powered thermostat with a safety device

(30) Priorité: 05.11.1990 FR 9013669
(43) Date de publication de la demande: 13.05.1992
(73) Titulaire: VERNET, F-91290 Ollainville (FR)
(72) Inventeur: Chamot, Jean-Pierre, F-91290 Arpajon (FR)
(74) Mandataire: Bernasconi, Jean

(56) Documents cités:
- EP-A- 0 333 687
- FR-A- 2 529 254
- FR-A- 2 630 161
- GB-A- 1 091 666
- US-A- 3 776 457
- PATENT ABSTRACTS OF JAPAN, vol. 8, no. 425 (M-292) 25 Avril 1984; & JP-A-59 006 480 (NISSAN JIDOSHA K.K.) 13 Janvier 1984
- PATENT ABSTRACTS OF JAPAN, vol. 9, no. 209 (M-407)(1932) 27 Août 1985; & JP- A-60 069 371 (FURAKAWA DENKI KOGYO K.K.) 20 Avril 1985
- PATENT ABSTRACTS OF JAPAN, vol. 9, no. 209 (M-407)(1932) 27 Août 1985; & JP- A-60 069 372 (FURUKAWA DENKI KOGYO K.K.) 20 Avril 1985

## Description

L'invention est relative aux thermostats actionnés par une capsule à cire qui, grâce au mouvement relatif entre le boîtier et le piston de la capsule à cire provoqué par la dilatation thermique de la cire, est agencée pour agir dans le sens de l'ouverture, en fonctionnement normal, sur un clapet principal monté sur un circuit de fluide aussitôt que la température de cette capsule à cire dépasse un seuil déterminé alors que ce clapet principal est maintenu fermé au-dessous de ce seuil.

Parmi les applications les plus courantes de tels thermostats, on peut citer les circuits de refroidissement à liquide de moteurs à combustion interne. Dans ce cas, les thermostats sont placés sur le circuit du liquide de refroidissement du moteur de façon à court-circuiter le radiateur associé à ce moteur lorsque la température du liquide de refroidissement sortant du moteur est inférieure au susdit seuil et, dans le cas contraire, à faire passer par le radiateur pour l'y refroidir le liquide de refroidissement qui sort du moteur avant de le renvoyer après refroidissement à ce dernier.

De tels thermostats fonctionnent en général de façon satisfaisante mais il peut néanmoins arriver que le piston de la capsule à cire se bloque dans son boîtier en position telle que le clapet principal soit maintenu fermé alors même que la température de la capsule à cire atteint et dépasse le susdit seuil. Ceci risque de provoquer de graves avaries au moteur qui mettent en jeu la vie du moteur et/ou la garantie du constructeur, tout particulièrement lorsqu'il s'agit d'un moteur de véhicule. Lorsque l'usager du véhicule dont le moteur a subi une telle avarie réclame l'application de la garantie, il est très difficile au garagiste concessionnaire de déterminer si cette avarie est effectivement due à une défaillance du thermostat ou à une négligence de l'usager du véhicule qui aurait par exemple omis de surveiller le voyant de température du liquide de refroidissement et qui aurait continué à faire fonctionner le moteur sans prendre les mesures qui s'imposent en un pareil cas.

Des incidents analogues peuvent se produire sur les chaudières équipées de tels thermostats, ainsi qu'il sera expliqué ci-après à l'aide des figures.

L'invention a pour but de créer un dispositif de sécurité pour thermostat, de fonctionnement simple et sûr, qui pallie les défaillances éventuelles du thermostat et plus particulièrement de sa capsule à cire et qui permette à l'utilisateur de constater l'apparition d'une telle défaillance. L'invention a en outre pour but de créer un dispositif de sécurité, pour moteur à combustion interne, qui permette de déterminer, sans contestation possible, si des avaries provoquées par surchauffe du fluide de refroidissement auraient pu être évitées par l'observation des mesures nécessaires de surveillance et d'entretien par l'utilisateur.

Afin d'atteindre les buts susvisés, le document GB-A-1.091.666 décrit un thermostat, pour circuit de refroidissement de moteur, qui n'est d'ailleurs pas actionné par une capsule à cire et dont le clapet principal est muni d'une ouverture normalement fermée par une plaque obturatrice qui est maintenue en place par un alliage fusible. En cas de surchauffe, l'alliage fond et dégage l'ouverture par libération de la plaque obturatrice. Un tel dispositif de sécurité, s'il est bien irréversible comme l'exige la présente invention, a l'inconvénient de risquer d'obstruer le circuit de refroidissement du moteur par entraînement de la soudure ayant fondu.

D'autres thermostats, comprenant un clapet muni d'ouvertures fermées par un alliage fusible, où un clapet fixé au thermostat par une liaison en alliage fusible, sont décrits dans FR-A-2 529 254 et EP-A-O 333 687. Ces réalisations présentent les mêmes inconvénients que celle décrite dans GB-A-1 091 666.

L'invention a pour but supplémentaire de munir le thermostat d'un dispositif de sécurité irréversible, c'est-à-dire qui nécessite l'intervention d'un spécialiste pour réparer ou remplacer le thermostat, sans que ce spécialiste ait à intervenir sur le reste du circuit de fluide, par exemple pour en éliminer la soudure entraînée de la façon indiquée ci-dessus.

A cet effet, l'invention a pour objet un thermostat du type défini en préambule, qui comprend des moyens, incorporés au thermostat et agencés de façon à ne pas intervenir sur le fonctionnement de ce dernier tant que leur température est inférieure à un deuxième seuil légèrement supérieur au premier seuil mais à agir sur la circulation du fluide dans le thermostat, lors du franchissement de ce deuxième seuil, de la même façon que si la capsule à cire avait normalement fonctionné, quel que soit l'état de la capsule à cire, caractérisé en ce que les susdits moyens sont constitués au moins en partie en alliage à mémoire de forme à effet simple, cet alliage à mémoire étant choisi de façon telle que sa température de transformation soit approximativement égale au deuxième seuil susvisé. Selon un mode de réalisation préféré appliqué à un circuit de liquide de refroidissement, ces moyens comprennent un clapet auxiliaire incorporé au thermostat, en parallèle avec le clapet principal, et maintenu normalement fermé par des moyens de retenue en alliage à mémoire de forme, ces moyens de retenue étant agencés de façon à provoquer, après transformation de l'alliage, l'ouverture du clapet auxiliaire tout au moins lors de la circulation du fluide.

On sait que les alliages à mémoire de forme, qui sont le plus souvent des alliages de cuivre tels que CuZnAl, CuZnAlNi et CuAlNi, ont pour singularité de conserver leurs propriétés mécaniques et en particulier leur forme (alliage à mémoire de forme) lorsqu'ils sont maintenus au-dessous de leur température (ou intervalle de température) de transformation mais de changer de propriétés mécaniques et en particulier de forme au-delà de cette température, laquelle peut être réglée avec une précision suffisante par ajustement des teneurs en métaux d'apport. Parmi ces alliages, ceux à effet simple se distinguent de ceux à effet double par le fait que leur transformation n'est pas totalement réversible. Ils sont disponibles dans le commerce, notamment auprès de la société française TREFIMETAUX ou la société des Etats-Unis RAYCHEM.

Le thermostat muni du dispositif de sécurité conforme à l'invention fonctionne comme un thermostat classique tant que la température de sa capsule ne dépasse pas son seuil de réglage. Si, par suite d'une défaillance de la capsule à cire, ce seuil est dépassé et qu'il atteint et dépasse la température de transformation de l'alliage constituant le système de retenue, selon le mode de réalisation préféré, celui-ci cesse d'agir et le clapet auxiliaire s'ouvre en permanence, tout au moins tant que le fluide de refroidissement est en circulation, ce qui permet de maintenir ce fluide à une température inférieure au susdit seuil. Du fait que le métal à mémoire de forme est à effet simple, le système de retenue ne peut être remis en place qu'après démontage du thermostat et, dans le cas d'un thermostat pour moteur de véhicule, le conducteur peut constater l'apparition de la défaillance et le remède apporté provisoirement à celle-ci par ouverture du clapet auxiliaire en observant que la température du moteur et, en hiver, celle de l'habitacle chauffé par emprunt de calories sur le circuit de refroidissement restent anormalement basses. Lors de la réparation qui suit du véhicule, l'examen du thermostat révèle sans risque d'erreur si le dispositif de sécurité est intervenu par suite d'une défaillance technique du thermostat ou d'une négligence de l'utilisateur.

Le dispositif de sécurité fonctionne de manière analogue lorsqu'il ne comprend pas de clapet auxiliaire mais, par exemple, un ressort en alliage à mémoire agissant en opposition avec le ressort principal qui tend à fermer le clapet principal qui est alors unique.

Il est à noter que l'intervention de l'alliage à mémoire à effet simple se fait sans entraînement de matière susceptible d'obstruer le circuit de fluide, contrairement au cas du document GB-A-1.091.666.

Il est à noter également que l'on a déjà proposé divers dispositifs de sécurité mettant à profit les alliages à mémoire (voir par exemple les documents JP-A-59 6480, 60 69371 et 60 69372), mais il s'agit là d'alliages à mémoire à effet double, si bien que le dispositif de sécurité est réversible et ne permet donc pas de vérifier après coup s'il est intervenu ou non et si par conséquent l'utilisateur a négligé de prendre les mesures nécessaires de surveillance et d'entretien.

L'invention va être maintenant décrite plus en détail à l'aide des modes de réalisation qui sont représentés aux dessins annexés.

Les figures 1 et 2 illustrent schématiquement deux circuits de refroidissement usuels pour moteurs à combustion interne.

Les figures 3 et 4 montrent respectivement, en coupe axiale, un thermostat établi conformément à un premier mode de réalisation de l'invention et, vu selon la flèche IV de la figure 3, le clapet principal de ce thermostat.

Les figures 5 et 6 montrent respectivement, en coupe axiale, un thermostat établi conformément à un deuxième mode de réalisation de l'invention et, vu selon la flèche VI de la figure 5, le clapet principal de ce thermostat.

La figure 7 montre un détail en coupe selon la ligne VII de la figure 6.

Les figures 8 et 9 montrent respectivement, en coupe axiale, un thermostat établi conformément à un troisième mode de réalisation de l'invention et, vu selon la flèche IX de la figure 8, le clapet principal de ce thermostat.

La figure 10 est une coupe selon la ligne X de la figure 8.

La figure 11 montre, à plus grande échelle, le détail désigné par XI à la figure 8.

Les figures 12 et 13 montrent respectivement, en coupe axiale, un thermostat établi conformément à un quatrième mode de réalisation de l'invention et, vu selon la flèche XIII de la figure 12, le clapet principal de ce thermostat.

La figure 14 est une coupe selon la ligne XIV de la figure 13.

Les figures 15 et 16 représentent, en coupe axiale, deux thermostats établis respectivement selon un cinquième et un sixième modes de réalisation de l'invention.

La figure 17 illustre, séparés par un axe vertical médian, deux thermostats établis selon un septième et un huitième modes de réalisation de l'invention.

La figure 18 illustre de même, séparés par un axe vertical médian, deux thermostats établis selon un neuvième et un dixième modes de réalisation de l'invention.

La figure 19 représente schématiquement l'application du dispositif de sécurité conforme à l'invention à un régulateur de tirage pour chaudière à combustible solide.

La figure 20 enfin illustre le fonctionnement du dispositif de sécurité de la figure 19.

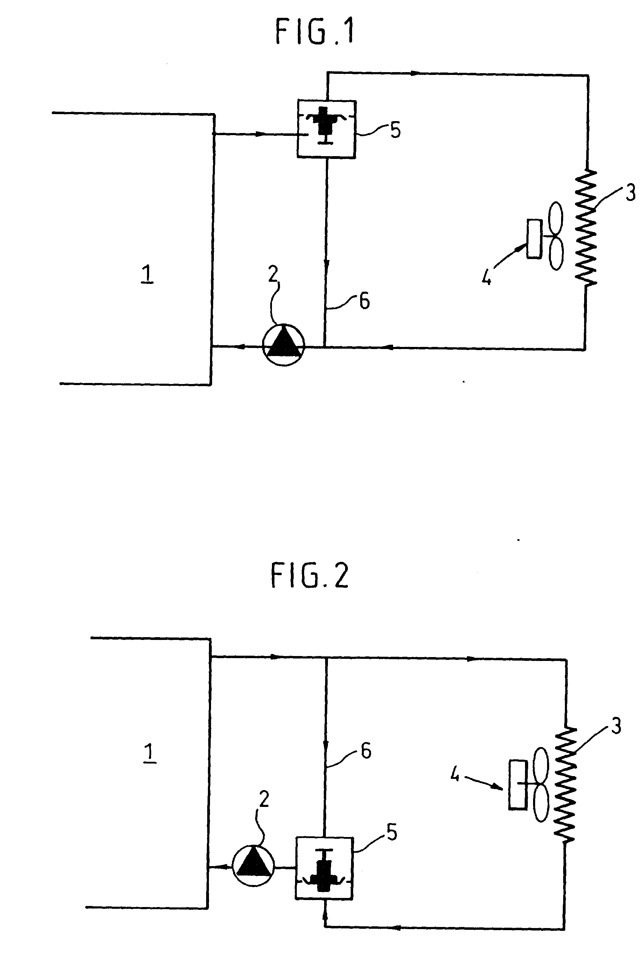

Avant de décrire l'invention, il paraît utile de rappeler, à l'aide des figures 1 et 2, comment sont constitués les circuits de refroidissement usuels pour moteurs à combustion interne. Le liquide de refroidissement du moteur 1, qui est mis en circulation dans le sens des flèches par une pompe 2, traverse, lorsque sa température dépasse un certain seuil, un radiateur 3 auquel est associé un ventilateur 4. Lorsque sa température est inférieure à ce seuil, le liquide de refroidissement est dévié, par un thermostat 5, vers un by-pass 6 en court-circuitant par conséquent le radiateur 3. Le thermostat 5 peut être monté soit à la sortie du moteur 1, comme le montre la figure 1, soit à l'entrée de celui-ci, comme le montre la figure 2.

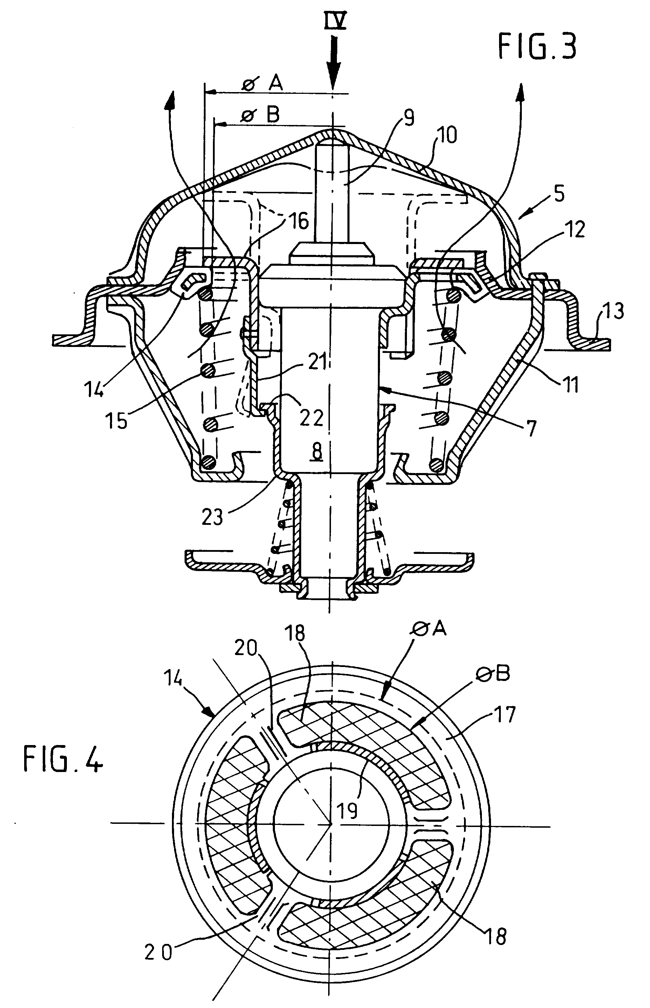

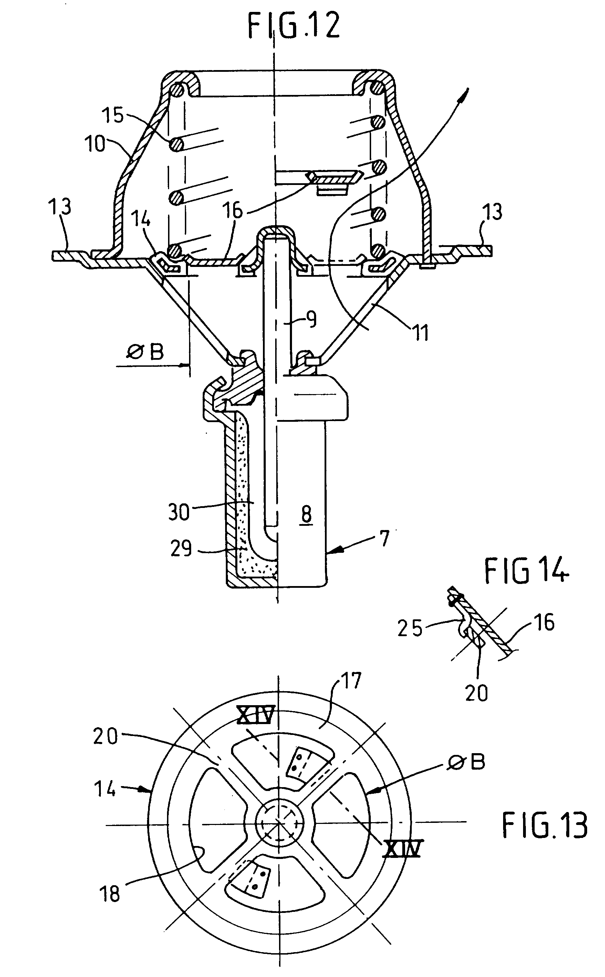

Comme le montre la figure 3, le thermostat 5 est actionné par une capsule à cire 7 de type connu, comprenant un boîtier 8 et un piston 9, ainsi qu'une cire dilatable (non montrée) qui est logée dans le boîtier 8 et contre laquelle s'appuie le piston 9, en général par l'intermédiaire d'une membrane étanche (non montrée). La cire et la membrane sont visibles à la figure 12 où elles sont désignées respectivement par 29 et par 30. Le thermostat 5 possède une ossature relativement rigide qui comprend des bras supérieurs 10 et des bras inférieurs 11 (les mots "inférieurs" et "supérieurs" correspondant simplement à la représentation de la figure 3), laissant entre eux des passages libres, ainsi qu'un siège tronconique 12 prolongé vers l'extérieur par une bride de fixation 13. Le piston 9 prend appui sur les bras supérieurs 10 et le boîtier 8 est relié, d'une manière qui sera précisée ci-après, à un clapet principal 14 qui est sollicité vers le siège 12 par un ressort 15 prenant appui sur les bras inférieurs 11. On conçoit que, lorsque la capsule 7, qui est baignée par le liquide de refroidissement sortant du moteur 1, est froide, le piston 9 est rétracté en grande partie à l'intérieur du boîtier 8 et le ressort 15 maintient le clapet principal 14 contre le siège 12, ce qui empêche le liquide de traverser le siège 12. On se trouve alors dans la situation de la figure 1 où ce liquide est dévié vers le by-pass 6. Au contraire, lorsque la capsule 7 est chaude, le piston 9 sort davantage du boîtier 8 en allongeant la capsule 7, ce qui provoque la descente du boîtier 8 et par conséquent du clapet principal 14 contre l'action du ressort 15 et permet, à une partie au moins du liquide de refroidissement mis en circulation par la pompe 2, de passer à travers le siège 12, vers le radiateur 3 de la figure 1.

Selon l'invention, on combine à ce thermostat connu 5 un dispositif de sécurité constitué par un clapet auxiliaire 16, incorporé au thermostat 5, en parallèle avec le clapet principal 14, et maintenu normalement fermé par des moyens de retenue en alliage à mémoire de forme à effet simple, cet alliage étant choisi de façon telle que sa température de transformation soit un peu supérieure au seuil susvisé et les moyens de retenue étant agencés de façon à provoquer, après transformation de l'alliage, l'ouverture du clapet auxiliaire 16 tout au moins lors du fonctionnement du thermostat 5.

Dans l'application préférée aux circuits de refroidissement par liquide de moteurs à combustion interne 1, notamment aux circuits de refroidissement scellés, on choisit un alliage dont la température de transformation est de l'ordre de 140°C ± 5°C, le seuil de fonctionnement normal du thermostat étant généralement de l'ordre de 90 à 100°C en régulation normale avec des pointes à 130°C.

Selon une solution avantageuse, le thermostat 5 est agencé de façon telle qu'après libération par les moyens de retenue, le clapet auxiliaire 16 soit entraîné dans le sens de son ouverture par la pression exercée sur sa face amont, dans le sens de circulation, par le liquide de refroidissement.

Alors que, dans les thermostats classiques, le clapet principal 14 n'est pas ajouré et assure à lui seul l'étanchéité au niveau du siège 12 lorsqu'il est appliqué contre celui-ci, selon l'invention, le clapet principal 14 comporte, à l'intérieur d'un anneau continu 17 (voir la figure 4), des fenêtres 18, au nombre de trois par exemple, dont le contour extérieur est limité par un cercle de diamètre ∅_{B}, l'anneau 17 étant relié à un moyeu central 19 par des bras 20.

Le clapet auxiliaire 16, dont le diamètre ∅_{A} est plus grand que le diamètre ∅_{B}, est normalement immobilisé par des clips de retenue 21 de profil en L, en alliage à mémoire, qui coopèrent avec le rebord 22 d'une douille 23 dans laquelle est logé le boîtier 8. Lorsque la température du liquide de refroidissement est inférieure au susdit seuil, le clapet principal 14, en métal garni de caoutchouc surmoulé, est appliqué extérieurement sur le siège fixe 12 et, intérieurement, ses fenêtres 18 sont obturées par le clapet auxiliaire 16. Lorsque la température du liquide de refroidissement augmente au-delà du seuil, la dilatation de la capsule 7 fait normalement s'abaisser en même temps le clapet principal 14 et le clapet auxiliaire 16 en ouvrant le siège 12. Si, par suite d'une défaillance de la capsule 7, cet abaissement ne se produit pas, la température du liquide de refroidissement continue à croître jusqu'à la température de transformation du métal à mémoire des clips 21, ceux-ci passant de la forme montrée en trait plein à la figure 3 à celle montrée en trait interrompu en libérant le clapet auxiliaire 16 qui est entraîné vers le haut de la figure 3, de la position montrée en trait plein à celle montrée en trait interrompu, par la pression du liquide refoulé par la pompe 2 (figure 1). Le liquide peut désormais traverser le thermostat 5 par les fenêtres 18, quelle que soit sa température.

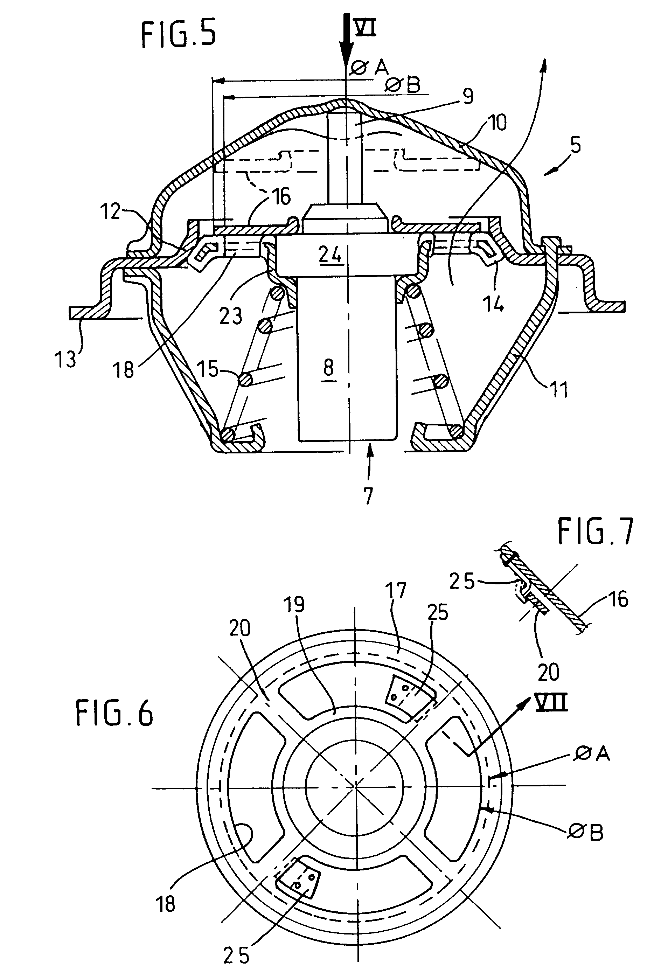

Les figures 5 à 7 représentent un thermostat établi conformément à un deuxième mode de réalisation de l'invention, les parties identiques ou analogues à des parties du premier mode de réalisation de l'invention y étant désignées par les mêmes signes de référence. Au point de vue de la construction générale, on peut noter que le ressort du rappel 15 est ici tronconique, et non cylindrique, que la douille 23 sert d'appui non pas au fond du boîtier 8 mais à la collerette 24 de ce dernier et que les fenêtres 18 et bras 20 sont au nombre de quatre, au lieu de trois, mais il s'agit là de détails n'influant pas sur le fonctionnement du thermostat 5. En fait, la seule différence notable consiste en ce que le clapet auxiliaire 16, qui est ici approximativement plan, est normalement immobilisé en aval des fenêtres 18 par deux clips 25, en alliage à mémoire, accrochés à deux bras diamétralement opposés 20 du clapet principal 14. Les clips 25 sont agencés pour prendre, au-delà de la température de transformation de l'alliage, une forme qui leur fait lâcher les bras 20 en permettant au liquide de refroidissement sous pression d'écarter le clapet auxiliaire 16 vers le haut.

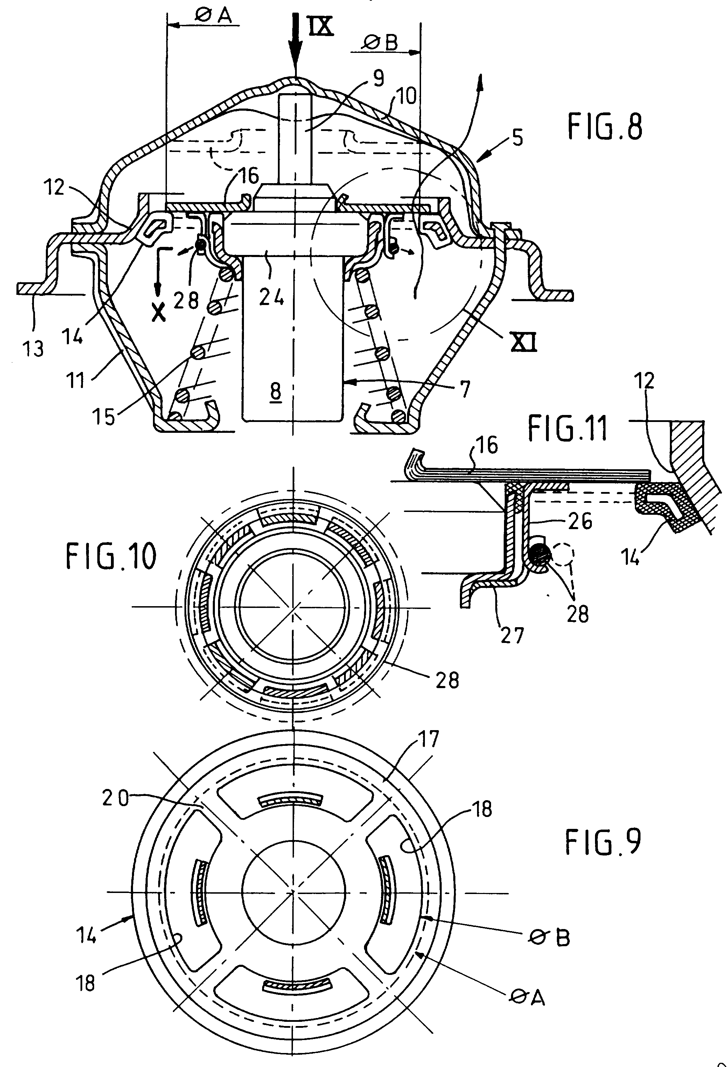

Le mode de réalisation des figures 8 à 11 diffère du précédent par la façon dont le clapet auxiliaire 16 est normalement relié au boîtier 8 de la capsule 7. Dans ce cas, le clapet auxiliaire 16 porte des pattes 26 et la douille 23 porte des pattes opposées 27, les pattes 26 et 27 étant recourbées de façon à constituer ensemble une sorte de gorge discontinue ouverte vers l'extérieur dans laquelle est engagé un jonc de retenue 28 en alliage à mémoire de forme agencé de façon à se déformer vers l'extérieur, de la position montrée en trait plein à la position montrée en trait interrompu à la figure 11, au franchissement de la température de déformation, ce qui libère le clapet auxiliaire 16 et lui permet d'être entraîné vers le haut de la figure 8.

Selon les modes de réalisation précédemment décrits, le clapet principal 14 s'ouvre à contre-courant et le clapet auxiliaire 16 s'ouvre dans le sens du courant (schématisé par des flèches). Bien entendu, le clapet principal 14 peut aussi, comme on le sait, s'ouvrir dans le sens du courant ainsi qu'il va être décrit à titre d'exemples en regard des figures 12 à 15.

Le mode de réalisation des figures 12 à 14 ne diffère de celui des figures 5 à 7 que par le fait que le ressort 15 agit sur le clapet principal 14 en prenant appui sur les bras supérieurs 10, que le piston 9 agit en sens inverse sur le clapet principal 14, pour l'ouvrir dans le sens du courant, et que le boîtier 8 est fixé aux bras inférieurs 11. Selon ce mode de réalisation, c'est le piston 9 qui est mobile par rapport à l'ossature 10, 11 et non le boîtier 8 mais le fonctionnement d'ensemble ne s'en trouve pas modifié.

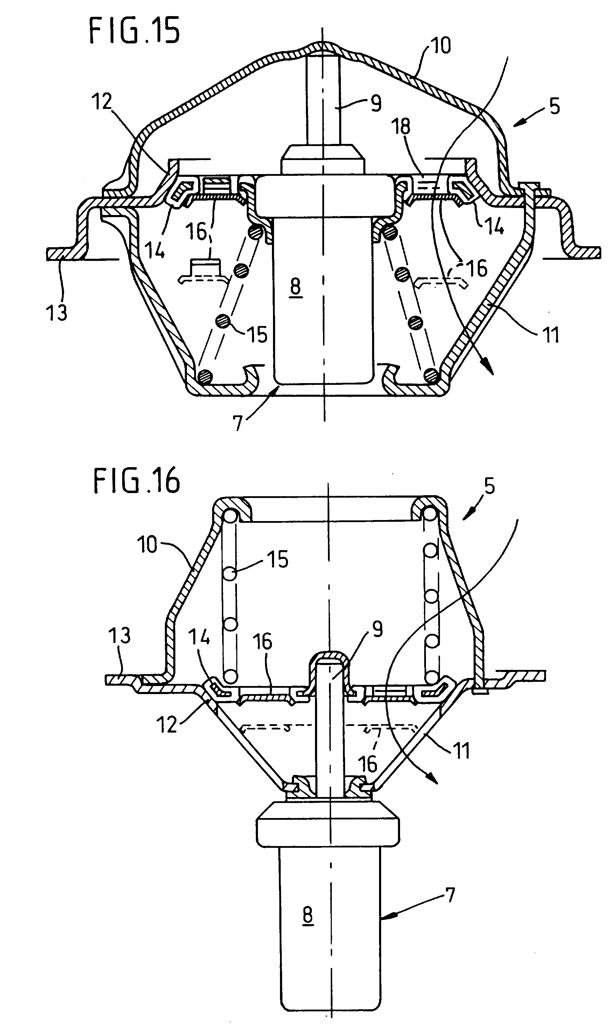

Selon les modes de réalisation qui viennent d'être décrits, la capsule à cire 7 est placée en amont du courant qui traverse le siège 12, du moteur 1 au radiateur 3. Selon les modes de réalisation des figures 15 et 16, la capsule à cire 7 est placée en aval du courant qui traverse le siège 12, du radiateur 3 au moteur 1. Les modifications devant être apportées en conséquence au thermostat 5 sont à la portée de l'homme du métier. On voit en particulier que le mode de réalisation de la figure 15 ne diffère essentiellement de celui des figures 5 à 7 que par le montage du clapet auxiliaire 16 au-dessous du clapet principal 14, c'est-à-dire toujours en aval dans le sens de la circulation à travers le siège 12. De même, le mode de réalisation de la figure 16 ne diffère essentiellement de celui des figures 12 à 14 que par le montage du clapet auxiliaire 16 au-dessous du clapet principal 14, c'est-à-dire toujours en aval du siège 12.

Dans tous les modes de réalisation décrits ci-dessus qui sont relatifs au refroidissement des moteurs à combustion interne, la section du clapet auxiliaire ou de sécurité 16 est égale à environ 75% de la section du clapet principal 14. Après refroidissement et remise en température, le conducteur du véhicule constatera que la température de l'eau de refroidissement reste anormalement basse et s'apercevra de l'existence d'une anomalie.

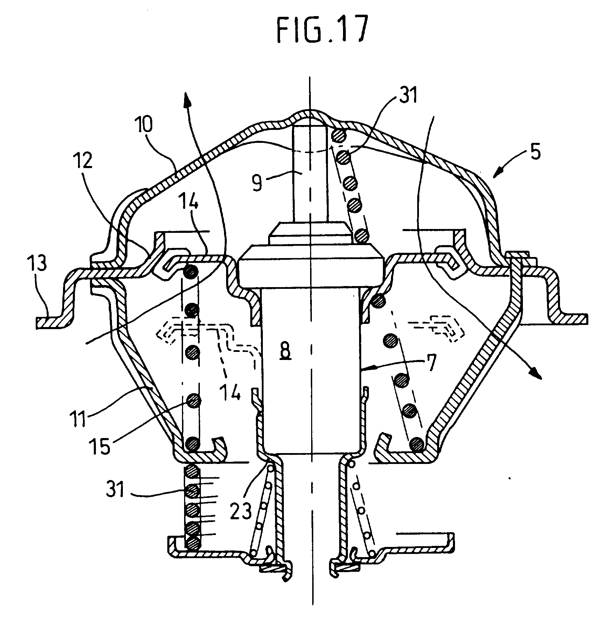

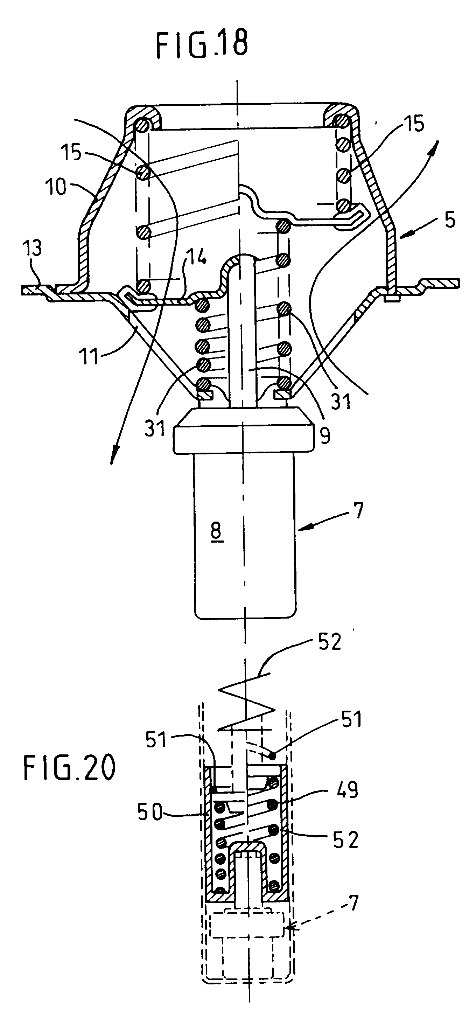

Dans les modes de réalisation décrits jusqu'ici en regard des figures 3 à 16, c'est le changement de forme d'un élément tel que 21, 25 et 28 en alliage à mémoire, au franchissement de la température de transformation qui est mis à profit. Mais le changement d'autres propriétés mécaniques, telles que l'élasticité, de l'alliage à mémoire peut également être mis à profit, ainsi qu'il va être précisé à l'aide des quatre modes de réalisation représentés aux parties gauches et droites des figures 17 et 18, où un ressort 31 en alliage à mémoire travaille en opposition avec le ressort 15 qui tend à fermer le clapet principal 14, sans qu'on ait besoin dans ce cas de faire appel à un clapet auxiliaire tel que 16.

Le mode de réalisation de la partie gauche de la figure 17 (qui correspond au schéma de la figure 1) s'apparente à celui de la figure 3 mais son clapet principal 14 est capable à lui seul d'obturer le siège 12. En opposition avec le ressort 15 qui s'appuie sur les bras inférieurs 11 et sollicite le clapet principal ou unique 14 dans le sens de la fermeture, il est prévu un ressort 31 en alliage à mémoire qui, en agissant sur la douille 23 servant d'appui au boîtier 8, tend à tirer ce dernier vers le bas. A la partie droite de la figure 17 (qui correspond au schéma de la figure 2), le ressort 31 en alliage à mémoire, au lieu de tirer sur le boîtier 8, pousse celui-ci en prenant appui sur les bras supérieurs 10, en produisant la même effet. Le mode de réalisation de la partie gauche de la figure 18 (qui correspond au schéma de la figure 1) s'apparente à celui de la figure 16 mais son clapet principal 14 est capable à lui seul d'obturer le siège 12. En opposition avec le ressort 15 qui s'appuie sur les bras supérieurs 10, il est prévu un ressort 31 en métal à mémoire qui, en prenant appui sur le boîtier 8 et/ou les bras inférieurs 11, tend à ouvrir le clapet principal ou unique 14. Le mode de réalisation de la partie droite de la figure 18 (qui correspond au schéma de la figure 2) s'apparente à celui de la figure 12 mais comprend lui aussi un ressort antagoniste 31 en alliage à mémoire.

Dans tous les modes de réalisation des figures 17 et 18, le ressort 31 en alliage à mémoire est calibré de façon telle que, avant franchissement de la température de transformation de cet alliage, il exerce une force plus faible que le ressort principal 15 mais que, après franchissement de cette température de transformation, il exerce une force plus importante que le ressort principal 15 et provoque ainsi l'ouverture du clapet 14, quelle que soit la position relative du piston 9 et du boîtier 8.

Bien que l'invention trouve son application principale au refroidissement des moteurs à combustion interne, elle peut également s'appliquer avec avantage aux régulateurs de tirage des chaudières, en particulier à combustible solide, auquel cas le fluide dont le débit est à contrôler n'est pas un fluide de refroidissement mais l'air de combustion.

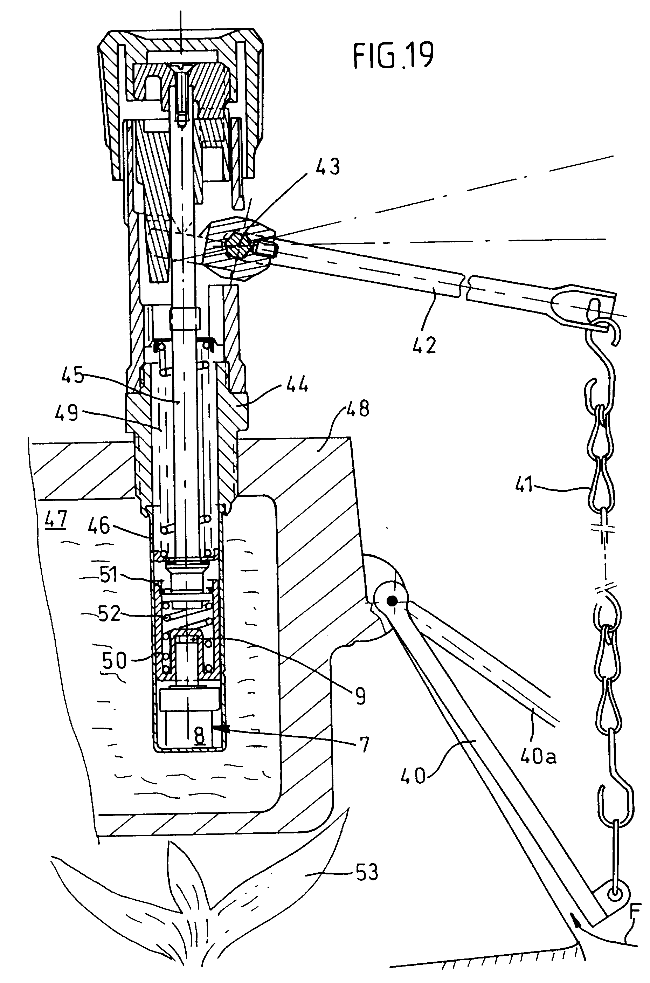

Une telle application est illustrée aux figures 19 et 20. Comme le montre la figure 19, un tel régulateur comporte une trappe d'admission de l'air de combustion dans la chaudière, cette trappe étant désignée par 40 en position de fermeture et par 40a en position d'ouverture, où le courant d'air admis est schématisé par une flèche F. Cette trappe 40 est actionnée, par l'intermédiaire d'une chaînette 41, par un levier 42 monté de façon à pouvoir pivoter autour d'un axe 43 sur le corps 44 du régulateur. Le levier 42 est poussé, contre l'action d'un ressort 49, par une tige coulissante 45 dont la position axiale est déterminée par une capsule à cire 7. Cette capsule est logée dans un tube 46 qui plonge dans l'eau 47 chauffée par la chaudière 48.

Entre le piston 9 de la capsule 7 et la tige 45 est interposé un dispositif de sécurité conforme à l'invention. Ce dispositif comprend un manchon 50 qui transmet normalement les mouvements du piston 9 à la tige 45 par l'intermédiaire d'un jonc élastique de retenue 51, logé dans une gorge intérieure du manchon 50 et maintenant normalement comprimé, sans possibilité de détente, un ressort 52 logé à l'intérieur du manchon 50. Ce ressort 52 est plus puissant que le ressort de régulation 49. Le jonc 50 est réalisé en alliage à mémoire de forme tel que, lorsque sa température dépasse le seuil de réglage du régulateur, par exemple 100°C, il se rétracte à l'intérieur du manchon 50 et libère ainsi le ressort 52 qui repousse alors la tige 45 dans le sens de la fermeture de la trappe 40. La flamme du brûleur alimenté en air de combustion par la trappe 40 est schématisée en 53. La mise en veilleuse de la chaudière ainsi réalisée signale à l'utilisateur de la chaudière l'apparition de l'incident. Le dispositif de sécurité conforme à l'invention est représenté séparément à la figure 20 qui montre, à sa partie gauche, la position de ses éléments lorsque la température de l'eau est comprise entre 20° et 95°C et, à sa partie droite, la position qu'ils prennent après franchissement de 100°C.

## Revendications

1. Thermostat (5) actionné par une capsule à cire (7) qui, grâce au mouvement relatif entre le boîtier (8) et le piston (9) de la capsule à cire (7) provoqué par la dilatation thermique de la cire (29), est agencée pour agir dans le sens de l'ouverture, en fonctionnement normal, sur le clapet principal (14) monté sur un circuit de fluide aussitôt que la température de cette capsule à cire (7) dépasse un seuil déterminé alors que ce clapet principal (14) est maintenu fermé au-dessous de ce seuil, lequel thermostat comprend des moyens, incorporés au thermostat (5) et agencés de façon à ne pas intervenir sur le fonctionnement de ce dernier (5) tant que leur température est inférieure à un deuxième seuil légèrement supérieur au premier seuil mais à agir sur la circulation du fluide dans le thermostat (7), lors du franchissement de ce deuxième seuil, de la même façon, que si la capsule à cire (7) avait normalement fonctionné, quel que soit l'état de la capsule à cire (7), caractérisé en ce que les susdits moyens sont constitués au moins en partie en alliage à mémoire de forme à effet simple, cet alliage étant choisi de façon telle que sa température de transformation soit approximativement égale au deuxième seuil susvisé.

2. Thermostat selon la revendication 1 pour fluide constitué par le liquide de refroidissement d'un moteur à combustion interne, les susdits moyens comprenant un clapet auxiliaire (16) incorporé au thermostat (7), en parallèle avec le clapet principal (14), caractérisé en ce que le clapet auxiliaire (16) est maintenu normalement fermé par des moyens de retenue en alliage à mémoire de forme, ces moyens de retenue étant agencés de façon à provoquer, après transformation de l'alliage, l'ouverture du clapet auxiliaire (16) tout au moins lors de la circulation du fluide.

3. Thermostat selon la revendication 1 pour fluide constitué par le liquide de refroidissement d'un moteur, caractérisé en ce que les moyens en alliage à mémoire sont constitués par un ressort (31) travaillant en opposition avec un ressort (15) qui tend à fermer le clapet principal (4).

4. Thermostat selon l'une des revendications 2 et 3, caractérisé en ce que l'alliage à mémoire de forme a une température de transformation de l'ordre de 140°C ± 5°C.

5. Thermostat selon l'une des revendications 2 et 4, caractérisé en ce qu'il est agencé de façon telle qu'après libération par changement de forme des moyens de retenue, le clapet auxiliaire (16) soit entraîné dans le sens de son ouverture par la pression exercée sur sa face amont, dans le sens de circulation, par le liquide de refroidissement.

6. Thermostat selon l'une quelconque des revendications 2, 4 et 5, caractérisé en ce que le clapet principal (14) comporte des fenêtres (18) à l'intérieur d'un anneau continu (17) qui est relié à un moyeu central (19) par des bras (20) et en ce que les moyens de retenue en alliage à mémoire de forme sont constitués par des clips (21, 25) retenant normalement le clapet auxiliaire (16) sur les bras (20), en aval du clapet principal (14).

7. Thermostat selon la revendication 6, caractérisé en ce que les clips (25) coopèrent avec les bras (20).

8. Thermostat selon l'une quelconque des revendications 2, 4, 5 et 7, carctérisé en ce que la section du clapet auxiliaire (16) est égale à environ 75 % de la section du clapet principal (14).

9. Thermostat selon la revendication 1, pour fluide constitué par l'air de combustion d'une chaudière, caractérisé en ce qu'il est incorporé à un régulateur de tirage de façon à agir sur une trappe (40) d'admission de cet air.

10. Thermostat selon la revendication 9, caractérisé en ce que l'alliage à mémoire a une température de transformation de l'ordre de 100°C.

## Claims

1. Thermostat (5) actuated by a wax capsule (7) which, by virtue of the relative movement between the casing (8) and the piston (9) of the wax capsule (7) caused by the thermal expansion of the wax (29), is arranged to act in the direction of opening, at the time of normal operation, on the main valve (14) mounted on a fluid circuit as soon as the temperature of this wax capsule (7) exceeds a predetermined threshold whereas this main valve (14) is kept closed below this threshold, which thermostat comprises means, incorporated in the thermostat (5) and arranged so as not to interfere with the operation of the latter (5) as long as their temperature is less than a second threshold slightly higher than the first threshold, but to act on the circulation of fluid in the thermostat (7), when this second threshold is exceeded, in the same way as if the wax capsule (7) had operated normally, whatever the state of the wax capsule (7), characterised in that the said means are constituted at least partly of alloy with a shape memory having a single action, this alloy being chosen so that its transformation temperature is approximately equal to the second above-mentioned threshold.

2. Thermostat according to Claim 1 for fluid constituted by the cooling liquid of an internal combustion engine, the said means comprising an auxiliary valve (16) incorporated in the thermostat (7), in parallel with the main valve (14), characterised in that the auxiliary valve (16) is kept normally closed by retaining means consisting of an alloy having a memory of shape, these retaining means being arranged in order to cause, after the transformation of the alloy, the opening of the auxiliary valve (16) at least at the time of circulation of the fluid.

3. Thermostat according to Claim 1, for fluid constituted by the cooling liquid of an engine, characterised in that the means consisting of a memory alloy are constituted by a spring (31) working in opposition with a spring (15) which tends to close the main valve (4).

4. Thermostat according to one of Claims 2 and 3, characterised in that the alloy having a memory of shape has a transformation temperature of the order of 140°C ±5°C.

5. Thermostat according to one of Claims 2 and 4, characterised in that it is arranged such that after release due to a change of shape of the retaining means, the auxiliary valve (16) is entrained in the direction of its opening by the pressure exerted on its upstream side, in the direction of circulation, by the cooling liquid.

6. Thermostat according to any one of Claims 2, 4 and 5, characterised in that the main valve (14) comprises apertures (18) inside a continuous ring (17) which is connected to a central hub (19) by arms (20) and in that the retaining means consisting of alloy having a memory of shape are constituted by clips (21, 25) normally retaining the auxiliary valve (16) on the arms (20), downstream of the main valve (14).

7. Thermostat according to Claim 6, characterised in that the clips (25) cooperate with the arms (20).

8. Thermostat according to one of Claims 2, 4, 5 and 7, characterised in that the section of the auxiliary valve (16) is equal to approximately 75% of the section of the main valve (14).

9. Thermostat according to Claim 1, for fluid constituted by the combustion air of a boiler, characterised in that it is incorporated in a draught regulator in order to act on a trap (40) for the admission of this air.

10. Thermostat according to Claim 9, characterised in that the memory alloy has a transformation temperature of the order of 100°C.

## Patentansprüche

1. Thermostat (5), der mit einer Wachskapsel (7) betrieben wird, die auf Grund der durch die Wärmeausdehnung des Wachses (29) hervorgerufenen Relativbewegung zwischen dem Gehäuse (8) und dem Kolben (9) der Wachskapsel (7) vorgesehen ist, um im Normalbetrieb in Öffnungsrichtung auf die auf einem Fluidkreislauf angeordnete Hauptklappe (14) einzuwirken, sobald die Temperatur dieser Wachskapsel (7) einen bestimmten Schwellenwert überschreitet, während diese Hauptklappe (14) unterhalb dieses Schwellenwerts geschlossen gehalten wird, welcher Thermostat Mittel umfaßt, die in den Thermostat (5) eingebaut und derart vorgesehen sind, daß sie nicht in den Betrieb dieses letzteren (5) eingreifen, solange ihre Temperatur unterhalb eines zweiten Schwellenwerts liegt, der etwas höher als der erste Schwellenwert ist, jedoch bei Überschreitung dieses zweiten Schwellenwerts auf den Kreislauf des Fluids in dem Thermostat (7) in der gleichen Weise einwirken, wie wenn die Wachskapsel (7) normal funktioniert hätte, und zwar unabhängig vom Zustand der Wachskapsel (7), dadurch gekennzeichnet, daß die genannten Mittel wenigstens zum Teil aus einer Metallegierung mit Formerinnerungsvermögen von einfacher Wirkung bestehen, wobei diese Legierung so gewählt ist, daß ihre Umwandlungstemperatur etwa dem angestrebten zweiten Schwellenwert entspricht.

2. Thermostat nach Anspruch 1 für ein Fluid, das von der Kühlflüssigkeit eines Verbrennungsmotors gebildet wird, wobei die genannten Mittel eine in den Thermostat (7) eingebaute, mit der Hauptklappe (14) parallele Hilfsklappe (16) umfassen, dadurch gekennzeichnet, daß die Hilfsklappe (16) normalerweise durch Rückhaltemittel aus einer Legisrung mit Formerinnerungsvermögen geschlossen gehalten wird, wobei diese Rückhaltemittel so vorgesehen sind, daß sie nach Umwandlung der Legierung zumindest bei Umlauf des Fluids die Öffnung der Hilfsklappe (16) bewirken.

3. Thermostat nach Anspruch 1 für ein Fluid, das von der Kühlflüssigkeit eines Motors gebildet wird, dadurch gekennzeichnet, daß die Mittel aus einer Legierung mit Formerinnerungsvermögen von einer Feder (31) gebildet werden, die gegen eine Feder (15) arbeitet, welche bestrebt ist, die Hauptklappe (14) zu schließen.

4. Thermostat nach einem der Ansprüche 2 und 3, dadurch gekennzeichnet, daß die Legierung mit Formerinnerungsvermögen eine Umwandlungstemperatur in der Größenordnung von 140°C ± 5°C aufweist.

5. Thermostat nach einem der Ansprüche 2 und 4, dadurch gekennzeichnet, daß er so vorgesehen ist, daß die Hilfsklappe (16) nach Freigabe durch die Formveränderung der Rückhaltemittel durch den von der Kühlflüssigkeit in Umlaufrichtung auf ihre stromaufwärtige Seite ausgeübten Druck in Richtung ihrer Öffnung bewegt wird.

6. Thermostat nach irgendeinem der Ansprüche 2, 4 und 5, dadurch gekennzeichnet, daß die Hauptklappe (14) Fenster (18) im Innern eines durchgehenden Ringes (17) aufweist, der mit einer zentralen Nabe (19) durch Arme (20) verbunden ist, und daß die Rückhaltemittel aus einer Legierung mit Formerinnerungsvermögen von Klemmen (21, 25) gebildet werden, die normalerweise die Hilfsklappe (16) stromabwärts von der Hauptklappe (14) auf den Armen (20) halten.

7. Thermostat nach Anspruch 6, dadurch gekennzeichnet, daß die Klemmen (25) mit den Armen (20) zusammenwirken,

8. Thermostat nach irgendeinem der Ansprüche 2, 4, 5 und 7, dadurch gekennzeichnet, daß der Querschnitt der Hilfskleppe (16) etwa 75% des Querschnitts der Hauptklappe (14) entspricht.

9. Thermostat nach Anspruch 1 für ein Fluid, das von der Verbrennungsluft eines Heizkessels gebildet Wird, dadurch gekennzeichnet, daß er so in einen Zugregler eingebaut ist, daß er auf eine Klappe (40) für die Zufuhr dieser Luft einwirkt.

10. Thermostat nach Anspruch 9, dadurch gekennzeichnet daß die Legierung mit Formerinnerungsvermögen eine Umwandlungstemperatur in der Größenordnung von 100°C aufweist.
